(19) Europäisches Patentamt

European Patent Office

Office européen des brevets

(11) **EP 0 945 164 B1**

(12) **EUROPEAN PATENT SPECIFICATION**

(45) Date of publication and mention
of the grant of the patent:
**06.11.2002 Bulletin 2002/45**

(51) Int Cl.⁷: **B01D 53/50**, B01D 53/78

(86) International application number:
**PCT/JP97/03583**

(21) Application number: **97942268.0**

(22) Date of filing: **07.10.1997**

(87) International publication number:
**WO 99/017863 (15.04.1999 Gazette 1999/15)**

(54) **WET TYPE EXHAUST GAS DESULFURIZATION METHOD**

VERFAHREN ZUR NASSENTSCHWEFELUNG VON ABGASEN

PROCEDE POUR LA DESULFURATION HUMIDE DE GAZ D'ECHAPPEMENT

(84) Designated Contracting States:
**BE DE DK FR GB**

(43) Date of publication of application:
**29.09.1999 Bulletin 1999/39**

(73) Proprietor: **NKK CORPORATION**
**Tokyo 100 (JP)**

(72) Inventors:
• **OKUYAMA, Keiichi**
**Tokyo 100 (JP)**
• **OGAKI, Yoji**
**Tokyo 100 (JP)**

• **INOUE, Norio**
**Tokyo 100 (JP)**
• **OYAMA, Shingo**
**Tokyo 100 (JP)**
• **MAYUMI, Kazuo**
**Tokyo 100 (JP)**

(74) Representative: **Grynwald, Albert et al**
**Cabinet Grynwald,**
**127, rue du Faubourg Poissonnière**
**75009 Paris (FR)**

(56) References cited:
**WO-A-97/09111**     **JP-A- 2 293 017**
**JP-A- 5 329 327**     **JP-A- 9 271 633**

**Description**

Technical Field

The present invention relates to a flue gas desulfurization (FGD) system for a combustion exhaust gas including a high-concentration sulfur oxide exhausted from steelworks and metal refineries.

Background Art

A lime gypsum FGD method for obtaining gypsum by desulfurizing a combustion exhaust gas including a sulfur oxide by contacting the combustion exhaust gas with a slurry including slaked lime or calcium carbonate and then air oxidating calcium sulfite generated in the slurry is a representative wet FGD method. This method is often used in desulfurizing facilities for exhaust gases including a sulfur oxide of not higher than about 5,000 ppm exhausted from coal boilers or thermal power plants. The reaction formula are given as follow.

$$SO_2 + Ca(OH)_2 \rightarrow CaSO_3 \cdot 1/2H_2O + 1/2H_2O \tag{1}$$

$$SO_2 + CaCO_3 + 1/2H_2O \rightarrow CaSO_3 \cdot 1/2H_2O + CO_2 \tag{1'}$$

$$CaSO_3 \cdot 1/2H_2O + 1/2O_2 + 3/2H_2O \rightarrow CaSO_4 \cdot 2H_2O \tag{2}$$

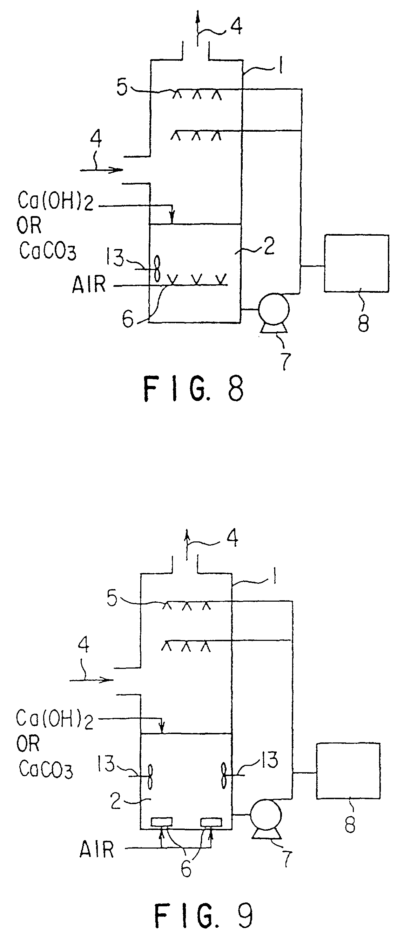

A conventional wet FGD unit according to the lime gypsum method is shown in FIG. 8.
An exhaust gas 4 including a sulfur oxide is introduced into an absorption tower 1, is then brought into contact with a slurry sprayed from a spray nozzle 5 so that the exhaust gas is desulfurized, and this desulfurized exhaust gas is exhausted from the top portion of the absorption tower 1. The sulfur oxide reacts with the slaked lime or calcium carbonate included in the spayed slurry, or is absorbed in a spray liquid and then reacts with the slaked lime or calcium carbonate to be added in a liquid storage bath 2, and becomes calcium sulfite. The calcium sulfite is oxidized by finely blown air sent from a diffuser 6 within the liquid storage bath 2 to become gypsum. The liquid in the liquid storage bath is stirred by a stirrer 13, and there is also a case where minute air bubbles are generated by using the shearing force of this stirrer.
The air blowing position is not particularly specified when the liquid in the liquid storage bath is stirred sufficiently (as described, for example, in the Jpn. Pat. Appln. KOKAI Publication No. 6-285327), and the air blowing position is at a middle stage section or in an upper area with low pH when the stirring is controlled to the extent of restricting the sedimentation of a solid material (as described, for example, in the Jpn. Pat. Appln. KOKOKU Publication No. 62-55890 and the Jpn. Pat. Appln. KOKOKU Publication No.1-59004).
The slurry including the gypsum after finishing the oxidation reaction is sent to the spray nozzle 5 and a gypsum recovering unit 8 by pressure by a slurry pump 7.
When the concentration of the sulfur oxide included in the gas to be processed is increased while maintaining the purity of the gypsum to be generated at 99% or above based on this prior-art technique, there is a limitation to the concentration of the sulfur oxide that can be processed if the same unit is used. Although the concentration of the sulfur oxide that can be processed increases along with an increase in the excess supply quantity of the blowing air, this is not effective and there is also an upper limit to the achievable concentration.
When a unit for desulfurizing a gas including a sulfur oxide of 1 volume percent or above is to be prepared based on the prior-art technique, the size of the liquid storage bath at the lower portion of the absorption tower needs to be abnormally large and this results in huge facilities costs and requires a large site for the facilities.

Disclosure of Invention

It is an object of the present invention to provide means for reducing the volume of the slurry in the liquid storage bath at the lower portion of the absorption tower while restricting the quantity of the blowing air to the minimum and securing the purity of the gypsum to be generated, in a unit for desulfurizing a combustion exhaust gas including a high-concentration sulfur oxide.
The above-described object is achieved by carrying out an oxidation reaction in the whole areas of the liquid storage bath while restricting the stirring in the upward and downward directions of the liquid storage bath to the minimum.

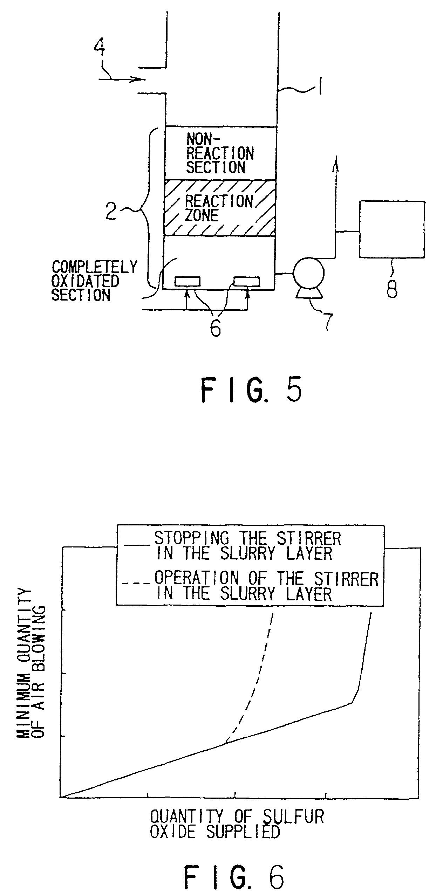

As a result of carrying out an oxidation experiment by installing diffusers 6 at the bottom of the liquid storage bath 2 of the conventional unit and promoting the quick progress of the oxidation reaction over the whole areas of the slurry so that the pH becomes 5.5 or below, as shown in FIG. 9, it has been known that the liquid storage bath has a layer structure as shown in FIG. 5. In other words, the liquid in the liquid storage bath has three layers, from the top surface of the liquid, of a non-reaction section in which a reaction is not carried out because oxygen is not supplied to this section though sulfite ion exists in this section, a reaction zone in which an oxidation reaction is progressed further with a lowered concentration of the sulfite ion toward the larger depth of the liquid, and a complete oxidation section in which dissolved oxygen is saturated and there exists no sulfite ion.

When dissolved oxygen of the equivalent of the sulfur oxide to be supplied to the liquid storage bath is supplied to the liquid, it becomes possible to maintain this layer structure steadily, and the air blowing quantity in this case is set as a minimum air blowing quantity. It is possible to increase the load of the sulfur oxide until the widths of the non-reaction section and the complete oxidation section are reduced and the reaction zone is expanded to the whole areas of the liquid storage bath. In this case, the concentration of the sulfite ion that takes a maximum value at the liquid surface is lowered as the liquid depth larger and the sulfite ion disappears at the bottom section of the liquid storage bath.

The minimum quantity of blowing air when the concentration of the sulfur oxide in the exhaust gas 4 is increased and the quantity of the sulfur oxide supplied to the liquid storage bath is increased is as shown in FIG. 6.

When the quantity of the sulfur oxide is increased, the width of the reaction zone increases. The reaction zone moves up and down between the liquid top surface and the marginal liquid depth at which the sulfite ion is immediately before leaking out to the slurry pump 7. The minimum quantity of blowing air increases substantially proportional to the concentration of the sulfur oxide until the upper surface of the reaction zone reaches the liquid top surface and the lower surface of the reaction zone reaches the depth of the liquid immediately before the point at which the sulfite ion is leaked out.

When the concentration of the sulfur oxide is further increased and the air blowing quantity is further increased in line with this, dissolved oxygen comes to be detected at the liquid upper surface and the concentration of the dissolved oxygen increases. This is the phenomenon that the quantity of oxygen that is discharged without being reacted in the liquid increases.

In order to maintain the purity of the gypsum that is generated, it is necessary to blow excess quantity of air, and the minimum quantity of blowing air increases rapidly corresponding to the increase in the quantity of the sulfur oxide.

Further, an increase in the air blowing quantity increases the stirring in the upward and downward directions of the slurry in the liquid storage bath. This has the operation of expanding the width of the reaction zone as described later and this further increases the additional quantity of blowing air. The increase in the air blowing quantity means the increase in the cost of the air blowing unit. In the actual unit, it is desirable to operate the unit under the condition of immediately before a sudden increase in the air blowing quantity.

Further, if the liquid in the liquid storage bath is stirred in the upward and downward directions by the stirrer as described with reference to FIG. 6, the quantity of the sulfur oxide that can be loaded when the minimum quantity of blowing air increases suddenly, that is the load limit of the unit, is lowered. The stirring is for expanding the width of the reaction zone.

A reduction in the load margin due to the increase in the stirring efficiency is also generated when a large-scale unit is prepared, and this becomes an interference. There is a limit to the increasing of the depth of the liquid when the volume of the slurry is increased. Since this results in expanding the bottom area, the stirring effect in the upward and downward directions is increased and the quantity of the sulfur oxide that can be loaded per unit volume of the slurry is decreased.

According to the present invention, the liquid storage bath in which the oxidation reaction is carried out over the whole areas is divided into two sections, and the mixing of the slurry is restricted effectively so that the total volume of slurry is decreased. The present invention has the following structures.

(1) A wet FGD (flue gas desulfurization) method for introducing a combustion exhaust gas including a sulfur oxide of 1 volume percent or above into an absorption tower, desulfurizing the combustion exhaust gas by bringing it into contact with a slurry including slaked lime or calcium carbonate, blowing air into the slurry stored at a lower portion of the absorption tower to make the slurry as a gypsum slurry, and recovering a part of the gypsum slurry with the rest being re-circulated as an absorption liquid for the sulfur oxide, wherein a liquid sub-storage bath is provided at the side of the absorption tower, with the liquid sub-storage bath connected with a bottom section of a liquid storage bath of the absorption tower, and air is blown from diffusers disposed at both bottom sections of the liquid storage bath of the absorption tower and the liquid sub-storage bath so that the slurry that has been oxidated insufficiently in the liquid storage bath of the absorption tower is oxidated completely in the liquid sub-storage bath and then the completely oxidated slurry is extracted.

(2) A wet FGD method for introducing a combustion exhaust gas including a sulfur oxide of 1 volume percent or above into an absorption tower, desulfurizing the combustion exhaust gas by bringing it into contact with a slurry including slaked lime or calcium carbonate, blowing air into the slurry stored at a lower portion of the absorption tower to make the slurry as a gypsum slurry, and recovering a part of the gypsum slurry with the rest being recirculated as an absorption liquid for the sulfur oxide, wherein a liquid storage bath of the absorption tower is partitioned by a bulkhead having a liquid flowing section at its bottom section, with a roof provided in only one of the partitioned liquid storage baths and the slurry including the sulfur oxide flowing into only the other liquid storage bath, and air is blown from diffusers disposed at both bottom sections of the liquid storage baths so that the slurry that has been oxidized insufficiently in the liquid storage bath without a roof is oxidized completely in the liquid sub-storage bath with the roof and then the completely oxidized slurry is extracted.

(3) A wet FGD method for introducing a combustion exhaust gas including a sulfur oxide of 1 volume percent or above into an absorption tower, desulfurizing the combustion exhaust gas by bringing it into contact with a slurry including slaked lime or calcium carbonate, blowing air into the slurry stored at a lower portion of the absorption tower to make the slurry as a gypsum slurry, and recovering a part of the gypsum slurry with the rest being recirculated as an absorption liquid for the sulfur oxide, wherein a liquid storage bath of the absorption tower is partitioned by a cylindrical bulkhead having a liquid flowing section at its bottom section so as to have a double structure of inside and outside liquid storage baths, with the slurry including the sulfur oxide flowing into only the inside liquid storage bath, and air is blown from diffusers disposed at both bottom sections of the liquid storage baths so that the slurry that has been oxidized insufficiently in the inside liquid storage bath is oxidized completely in the outside liquid sub-storage bath and then the completely oxidized slurry is extracted.

(4) A wet FGD method according to claim 1, wherein the volume ratio of the liquid storage bath to the liquid sub-storage bath is set at values between 70 : 30 and 30 : 70.

(5) A wet FGD method according to claim 2, wherein the volume ratio of the liquid storage bath without a roof to the liquid sub-storage bath with the roof is set at values between 70 : 30 and 30 : 70.

(6) A wet FGD method according to claim 3, wherein the volume ratio of the inside liquid storage bath to the outside liquid sub-storage bath is set at values between 50 : 50 and 20 : 80.

The operation of the above-described structures will be explained next.

It is impossible to completely extinguish the stirring in the upward and downward directions of the liquid storage bath. When the liquid storage bath is divided into two portions, it becomes possible to effectively restrict the mixing of slurries including high-concentration·sulfite ions and low-concentration sulfite ions. Further, since the divided liquid storage baths have small bottom areas, the stirring in the upward and downward directions is restricted with an amplified effect. This is particularly effective for a large-scale FGD unit having a large quantity of gas to be processed.

When air is blown from the bottom sections of the two liquid storage baths while restricting the stirring in the upward and downward directions and when an oxidation reaction is generated in the whole areas of the two liquid storage baths, it becomes possible to decrease the total volume of slurry in the liquid storage baths to the combustion exhaust gas including a high-concentration sulfur oxide while restricting to the minimum the air blowing quantity as well as securing the purity of the gypsum to be generated. This is particularly effective for a combustion exhaust gas including a high-concentration sulfur oxide of 1 volume percent or above.

In the document JP5329327A is described a single absorption tower wherein a fluid passageway is provided so as to gather absorption liquid that is poured to a liquid storage tank and produce a low rate which speed can only prevent a rise of air. Then air is blown into the bottom region of the tower through the fluid passageway.

In document JP 2293017A, a second slurry tank is provided in order to prevent an interference action caused by $AlF_x$ which is produced by the reaction of HF gas and Al contained in dust in combustion exhaust gas.

Brief description of drawings

FIG. 1 is an explanatory diagram for implementing one example of the mode of implementing the present invention;
FIG. 2 is an explanatory diagram of a unit for implementing another example of the mode of implementing the present invention;
FIG. 3 is an explanatory diagram of a unit for implementing still another example of the mode of implementing the present invention;
FIG. 4 is an explanatory diagram for showing a disposition of an ejector and a direction of blowing air bubbles;
FIG. 5 is a conceptional diagram for showing a reaction state within a liquid storage bath of an absorption tower;
FIG. 6 is an explanatory diagram for showing a relationship between the quantity of a sulfur oxide to be supplied and the minimum quantity of blowing air;

FIG. 7 is an explanatory diagram for showing concentrations of sulfite ions in the upward and downward directions in a liquid storage bath and a liquid sub-storage bath;

FIG. 8 is an explanatory diagram of conventional wet FGD facilities; and

FIG. 9 is an explanatory diagram of the conventional wet FGD facilities having air bubble generators disposed at the bottom portion of the liquid storage bath.

(Explanation of reference numerals

1, 1a, 1b --- absorption towers, 2 --- a liquid storage bath, 2a --- a liquid storage bath without a roof, 2b - -- an inside liquid storage bath, 3 --- a liquid sub-storage bath, 3a --- a liquid sub-storage bath with a roof, 3b --- an outside liquid sub-storage bath, 4 --- an exhaust gas, 5 --- spray nozzle(s), 6 --- diffuser(s), 7 --- a slurry pump, 8 --- a gypsum recovering unit, 9 --- a bulkhead, 9a --- a cylindrical bulkhead, 11 --- a liquid flowing section, 12 --- a gas flowing section.)

Best Mode of Carrying Out the Invention

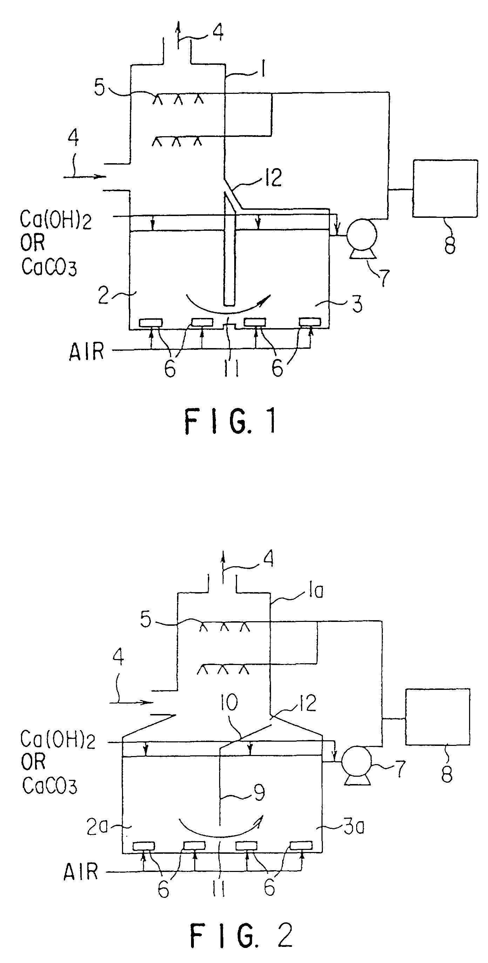

One example of the mode of implementing the present invention will be explained below with reference to FIG. 1.

A liquid sub-storage bath 3 is provided at the side of an absorption tower 1, and the bottom section of a liquid storage bath 2 of the absorption tower is connected to the liquid sub-storage bath 3 through a liquid flowing section 11. The connection point of the liquid sub-storage bath 3 is not particularly limited to the bottom section but this may be an upper section. In this case, the upper section of the liquid sub-storage bath 3 is connected directly to the bottom section of the liquid storage bath 2 or a slurry extracted from the bottom section of the liquid storage bath 2 is sent to the upper section of the liquid sub-storage bath 3. An example of having both bottom sections connected together will be explained below. The shapes of the cross sections of the liquid storage bath 2 and the liquid sub-storage bath 3 are not particularly limited to a circular shape.

Diffusers 6 for blowing air are installed at the bottom section of the absorption tower liquid storage bath 2, and an oxidation is carried out by restricting the stirring in the upward and downward directions. The slurry which has been oxidated insufficiently is sent to the liquid sub-storage bath 3 equipped with the diffusers 6 and this slurry is oxidated again while restricting the stirring in the upward and downward directions.

It is suitable to set the volume ratio of the liquid storage bath 2 to the liquid sub-storage bath 3 at values between 70 : 30 and 30 : 70.

Since the pH of the slurry is lowered by the generation of a sulfurous acid or a sulfuric acid, the pH is neutralized by inputting a slurry of slaked lime or calcium carbonate in the liquid storage bath 2, the liquid sub-storage bath 3 and/ or in the piping between the exit of the liquid sub-storage bath 3 and a slurry pump 7. But the pH is controlled at a value of pH 5.5 or below at which the oxidation reaction is progressed quickly over the whole areas of the liquid storage bath 2 and the liquid sub-storage bath 3. This slurry may be input to any position, either to one position or to a plurality of positions, of the liquid storage bath 2, the liquid sub-storage bath 3 and the piping between the exit of the liquid sub-storage bath 3 and the slurry pump 7. Since scales can be easily generated in the liquid flowing section 11, the liquid flowing section 11 needs to be as thick and short as possible.

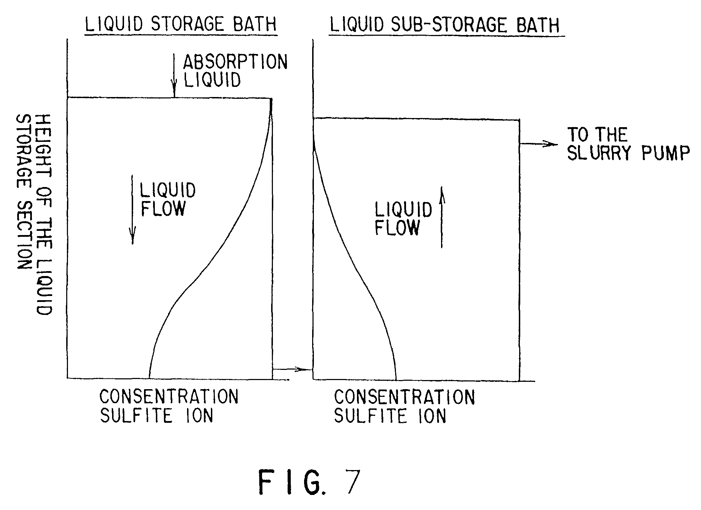

Slopes of the concentration of sulfite ions are generated in the upward and downward directions within the liquid storage bath 2 and the liquid sub-storage bath 3, as shown in FIG. 7.

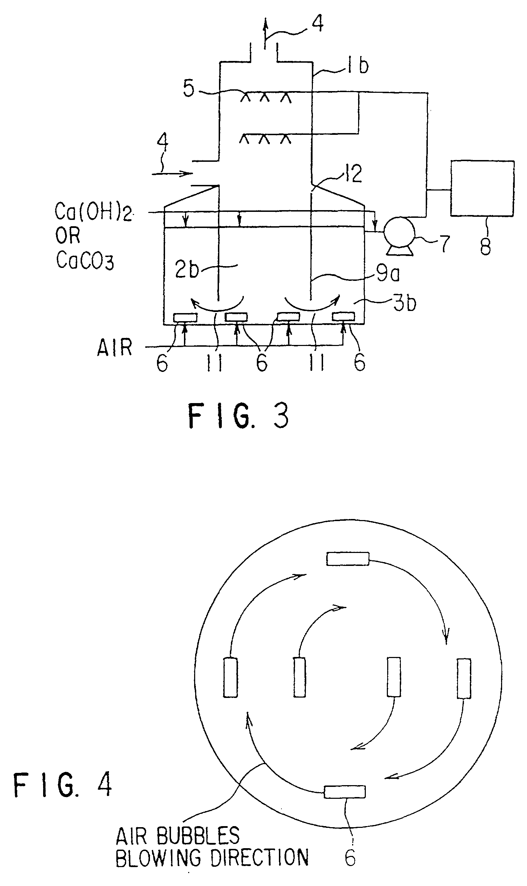

Ejectors which have high dissolving efficiency of oxygen are desirable for the diffusers 6. However, the type is not limited to this. The ejectors use a part of the slurry emitted from the slurry pump 7 as a driving liquid and suck air by a negative pressure generated by this. When ejectors are used, it is desirable that the cross section of the liquid storage bath is formed in a circular shape, and the ejectors are disposed by a plurality of number in the whole areas of the bottom section of the liquid storage bath as shown in FIG. 4. It is further desirable that a circular flow is formed by avoiding an occurrence of a falling flow of the liquid from the upper section and the air bubbles are dispersed thoroughly. A thorough dispersion of the air bubbles in the horizontal direction makes it possible to reduce the width of the reaction zone and to increase the quantity of the sulfur oxide that can be loaded to the per unit volume of the slurry. Further, according to this system, there does not occur a sedimentation of gypsum particles at the bottom section of the liquid storage bath, and it is not particularly necessary to install a stirrer.

It is desirable that the quantity of blowing air is as small as possible in order to be able to restrict the quantity of oxygen to be discharged without being consumed in the slurry to the minimum and to restrict the stirring of the slurry in the upward and downward directions. A desirable quantity of blowing air is the one which can restrict the concentration of the dissolved oxygen at the liquid surface of the liquid storage bath 2 and the liquid sub-storage bath 3 respectively to 1 ppm or below.

The gas discharged from the liquid surface of the liquid sub-storage bath 3 may be discharged straight into the atmosphere. However, it is desirable that this gas is returned to the absorption tower 1 through a gas flowing section 12 because a slight volume of sulfur oxide might be included in this gas.

The slurry after having been oxidized completely at the upper section of the liquid sub-storage bath 3 is extracted by the slurry pump 7, and is then sent by pressure to a gypsum recovering unit 8 and a spray nozzle 5. When the quantity of blowing air is controlled so that the oxidation-reduction potential of the slurry sent to the slurry pump 7 from the liquid sub-storage bath 3 becomes 250 mV or above, a high-purity gypsum including no non-oxidated material is obtained from the gypsum recovering unit.

When the sulfur oxide in the exhaust gas 4 introduced into the absorption tower 1 has a high concentration of 1 volume percent or above, a sufficiently high desulfurization rate can be obtained even if the pH of the absorption liquid sprayed from the spray nozzle 5 is 5. This is because the equilibrium concentration of the sulfur oxide of the liquid becomes high since the concentration of the sulfur oxide of the gas is high, and the spray drips can continue to absorb the sulfur oxide until the pH becomes 2 or lower.

One example of experimental data in the mode of this implementation is shown below.

At first, as a comparative example, operation conditions for the case where one liquid storage bath is used and a slurry is stirred are shown below. The unit used is as shown in FIG. 9.

Exhaust gas

Concentration of sulfur oxide: 3 vol% (30,000 ppm)
Flow rate: 960 Nm$^3$/h
Desulfurization rate: 93%
Volume of liquid storage bath: $\phi$ 2m $\times$ liquid depth 3m total 9.4 m$^3$
Quantity of blowing air: 142 Nm$^3$/h
Purity of gypsum generated: 95%

It has been possible to process 2.8 Nm$^3$ of sulfur oxide per one hour for 1 m$^3$ volume of slurry in the liquid storage bath. Further, 45% of oxygen in the air blown was consumed for the oxidation reaction.

In contrast to the above, operation conditions for the case where the volume of the liquid storage bath is small, a liquid sub-storage bath is installed and the slurry other than that by the air bubble generator is not stirred are shown below. The unit used is as shown in FIG. 1.

Exhaust gas

Concentration of sulfur oxide: 3 vol% (30,000 ppm)
Flow rate: 1,480 Nm$^3$/h
Desulfurization rate: 85%
Volume of liquid storage bath: $\phi$ 1.4m $\times$ liquid depth 3m $\times$ 2 baths total 9.2 m$^3$
Quantity of blowing air: 115 Nm$^3$/h (total 2 baths)
Purity of gypsum generated: 99% or above

The reduction in the desulfurization rate is because the quantity of the absorption liquid to be supplied from the spray nozzle is set at the same as that of the comparative example although a higher exhaust-gas flow rate was used than the exhaust-gas flow rate of the comparative example. The value of desulfurization rate can be increased by increasing the quantity of the absorption liquid. In the present experiment, the quantity of sulfur oxide that can be processed per one hour increased to 4.1 Nm$^3$ for 1 m$^3$ volume of slurry in the liquid storage bath. Further, the proportion of oxygen in the air blown used for the oxidation reaction increased to 78%.

In both experiments, ejectors were used for the diffusers 6.

A second example of the mode of implementation of the present invention will be explained below with reference to FIG. 2.

The liquid bath in an absorption tower 1a is partitioned by a bulkhead 9 provided with a liquid flowing section 11 at its bottom section, and a roof 10 is installed in only a liquid storage bath 3a and a slurry having absorbed a sulfur oxide flows to only a liquid storage bath 2a. The cross sectional shape of the liquid storage bath of the absorption tower 1a is not particularly limited to a circular shape.

Diffusers 6 are installed at the bottom section of the absorption tower 1a, a slurry insufficiently oxidized in the liquid storage bath 2a while restricting the stirring in the upward and downward directions is sent to the liquid sub-storage bath 3a having the roof, and this slurry is oxidized again in this bath by restricting the stirring in the upward and downward directions. It is suitable to set the volume ratio of the liquid storage bath 2a to the liquid sub-storage bath 3a between 70 : 30 and 30 : 70.

Since the pH of the slurry is lowered by the generation of a sulfurous acid or a sulfuric acid, the pH is neutralized by inputting a slurry of slaked lime or calcium carbonate in the liquid storage bath 2a, the liquid sub-storage bath 3a and/or in the piping between the exit of the liquid sub-storage bath 3a and a slurry pump 7. But the pH is controlled at a value of pH 5.5 or below at which the oxidation reaction is progressed quickly over the whole areas of the liquid storage bath 2a and the liquid sub-storage bath 3a. This slurry may be input to any position, either to one position or to a plurality of positions, of the liquid storage bath 2a, the liquid sub-storage bath 3a and the piping between the exit of the liquid sub-storage bath 3a and the slurry pump 7. Since scales can be easily generated in the liquid flowing section 11, the liquid flowing section 11 needs to be as large as possible to the extent that the restriction of the mixing in the two liquid storage baths is not interrupted.

Slopes of the concentration of sulfite ions are generated in the upward and downward directions within the liquid storage bath 2a and the liquid sub-storage bath 3a, as shown in FIG. 7.

Ejectors which have high dissolving efficiency of oxygen are desirable for the diffusers 6. However, the type is not limited to this. The ejectors use a part of the slurry emitted from the slurry pump 7 as a driving liquid and suck air by a negative pressure generated by this. When ejectors are used, it is desirable that the cross section of the liquid storage bath is formed in a circular shape, and the ejectors are disposed at the bottom section of the absorption tower 1a by a plurality of number in the whole areas of the bottom section of the liquid storage bath as shown in FIG. 4. It is further desirable that a circular flow is formed by avoiding an occurrence of a falling flow of the liquid from the upper section and the air bubbles are dispersed thoroughly in the horizontal direction. Further, according to this system, there does not occur a sedimentation of gypsum particles at the bottom section of the liquid storage bath, and it is not particularly necessary to install a stirrer.

It is desirable that the quantity of blowing air is as small as possible in order to restrict the stirring of the slurry in the upward and downward directions. A desirable quantity of blowing air is the one which can restrict the concentration of the dissolved oxygen at the liquid surface of the liquid storage bath 2a and the liquid sub-storage bath 3a respectively to 1 ppm or below.

The gas discharged from the liquid surface of the liquid sub-storage bath 3a may be discharged straight into the atmosphere. However, it is desirable that this gas is returned to the absorption tower 1a through a gas flowing section 12 because a slight volume of sulfur oxide might be included in this gas.

In this example, it is not desirable to generate a too much strong turning flow because upward and downward flows occur by the bulkhead 9. Since a severe turning flow is generated particularly at the bottom section of the liquid storage bath, the bulkhead 9 should not be installed in the range at least from the bottom section to the 1m height, and this section having no bulkhead may be used as the liquid flowing section 11.

All the other structures than that described above are similar to those of FIG. 1 for the first mode of implementation.

Next, a third example of the mode of implementation of the present invention will be explained below with reference to FIG. 3.

A liquid storage bath of an absorption tower 1b is partitioned by a cylindrical bulkhead 9a provided with a liquid flowing section 11 at its bottom section so as to have a double structure of an inside liquid storage bath 2b and an outside liquid sub-storage bath 3b, and a slurry including a sulfur oxide flows into only the inside liquid storage bath 2a. The cross sectional shapes of the absorption tower 1b and the liquid storage baths with the bulkhead 9a are not particularly limited to circular shapes. The bulkhead 9a may be a tube shape, not limited to circular cross sectional shape.

Diffusers 6 are installed at the bottom section of the absorption tower 1b, a slurry insufficiently oxidated in the inside liquid storage bath 2b while restricting the stirring in the upward and downward directions is sent to the outside liquid sub-storage bath 3b, and this slurry is oxidated again in this bath by restricting the stirring in the upward and downward directions. It is suitable to set the volume ratio of the liquid storage bath 2b to the liquid sub-storage bath 3b between 50 : 50 and 20 : 80.

In this example, since the outside liquid sub-storage bath 3b has a structure particularly suitable for restricting the stirring in the upward and downward directions, the outside liquid sub-storage bath 3b can take a large volume.

Since the pH of the slurry is lowered by the generation of a sulfurous acid or a sulfuric acid, the pH is neutralized by inputting a slurry of slaked lime or calcium carbonate in the liquid storage bath 2b, the liquid sub-storage bath 3b and/or in the piping between the exit of the liquid sub-storage bath 3b and a slurry pump 7. But the pH is controlled at a value of pH 5.5 or below at which the oxidation reaction is progressed quickly over the whole areas of the liquid storage bath 2b and the liquid sub-storage bath 3b. Since scales can be easily generated in the liquid flowing section 11, the liquid flowing section 11 needs to be as large as possible to the extent that the restriction of the mixing in the two liquid storage baths is not interrupted.

Slopes of the concentration of sulfite ions are generated in the upward and downward directions within the liquid storage bath 2b and the liquid sub-storage bath 3b, as shown in FIG. 7.

Ejectors which have high dissolving efficiency of oxygen are desirable for the diffusers 6. However, the type is not limited to this. The ejectors use a part of the slurry emitted from the slurry pump 7 as a driving liquid and suck air by a negative pressure generated by this. When ejectors are used, it is desirable that the cross sectional shapes of the absorption tower 1b and the cylindrical bulkhead 9a are formed in circular shapes, and the ejectors are disposed at the bottom section of the absorption tower 1b by a plurality of number in the whole areas of the bottom section of the liquid storage bath as shown in FIG. 4. It is further desirable that a circular flow is formed by avoiding an occurrence of a falling flow of the liquid from the upper section and the air bubbles are dispersed thoroughly in the horizontal direction. Further, according to this system, there does not occur a sedimentation of gypsum particles at the bottom section of the liquid storage bath, and it is not particularly necessary to install a stirrer.

It is desirable that the quantity of blowing air is as small as possible in order to restrict the stirring of the slurry in the upward and downward directions. A desirable quantity of blowing air is the one which can restrict the concentration of the dissolved oxygen at the liquid surface of the liquid storage bath 2b and the liquid sub-storage bath 3b respectively to 1 ppm or below.

The gas discharged from the liquid surface of the liquid sub-storage bath 3b may be discharged straight into the atmosphere. However, it is desirable that this gas is returned to the absorption tower 1b through a gas flowing section 12 because a slight volume of sulfur oxide might be included in this gas.

All the other structures than that described above are similar to those of FIG. 1 for the first mode of implementation.

According to the present invention, it becomes possible to reduce the volume of the slurry in the liquid storage bath at the lower portion of the absorption tower while restricting the quantity of the blowing air to the minimum and securing the purity of the gypsum to be generated, for a combustion exhaust gas including a high-concentration sulfur oxide.

**Claims**

1.   A wet FGD (flue gas desulfurization) method for introducing a combustion exhaust gas including a sulfur oxide of 1 volume percent or above into an absorption tower, desulfurizing said combustion exhaust gas by bringing it into contact with a slurry including slaked lime or calcium carbonate, blowing air into said slurry stored at a lower portion of said absorption tower to make said slurry as a gypsum slurry, and recovering a part of said gypsum slurry with the rest being recirculated as an absorption liquid for said sulfur oxide, wherein a liquid sub-storage is provided at the side of said absorption tower, with said liquid sub-storage bath connected with a bottom section of a liquid storage bath of said absorption tower, and air is flown from diffusers disposed at both bottom sections of said liquid storage bath of said absorption tower and said liquid sub-storage bath so as firstly to insufficiently oxidize said slurry while simultaneously restricting the stir of said slurry in the upward and downward direction in said liquid storage bath and, secondly, to completely oxidize said insufficiently oxidized slurry while simultaneously restricting the stir of said insufficiently oxidized slurry in the upward and downward direction in said liquid sub-storage bath to obtain a completely oxidized slurry and then said completely oxidized slurry is extracted.

2.   A wet FGD method for introducing a combustion exhaust gas including a sulfur oxide of 1 volume percent or above into an absorption tower, desulfurizing said combustion exhaust gas by bringing it into contact with a slurry including slaked lime or calcium carbonate, blowing air into said slurry stored at a lower portion of said absorption tower to make said slurry as a gypsum slurry, and recovering a part of said gypsum slurry with the rest being re-circulated as an absorption liquid for said sulfur oxide, wherein a liquid storage bath of said absorption tower is partitioned by a bulkhead having a liquid flowing section at its bottom section to form a first liquid storage bath and a second liquid storage bath, with a roof provided in only said second liquid storage bath and said slurry including said sulfur oxide flowing into only said first liquid storage bath, and air is blown from diffusers disposed at both bottom sections of said first and second liquid storage baths so as firstly to insufficiently oxidize said slurry while simultaneously restricting the stir of said slurry in the upward and downward direction in said first liquid storage bath and secondly to completely oxidize said insufficiently oxidized slurry while simultaneously restricting the stir of said insufficiently oxidized slurry in the upward and downward direction in said second liquid storage bath to obtain a completely oxidized slurry and then said completely oxidized slurry is extracted.

3.   A wet FGD method for introducing a combustion exhaust gas including a sulfur oxide of 1 volume percent or above into an absorption tower, desulfurizing said combustion exhaust gas by bringing it into contact with a slurry including slaked lime or calcium carbonate, blowing air into said slurry stored at a lower portion of said absorption tower to make said slurry as a gypsum slurry, and recovering a part of said gypsum slurry with the rest being re-circulated as an absorption liquid for said sulfur oxide, wherein a liquid storage bath of said absorption tower is partitioned by a cylindrical bulkhead having a liquid flowing section at its bottom section so as to have a double structure of inside and outside liquid storage baths, with said slurry including said sulfur oxide flowing into only said inside liquid storage bath, and air is blown from diffusers disposed at both bottom sections of said liquid storage baths so as firstly to insufficiently oxidize said slurry while simultaneously restricting the stir of said slurry in the upward and downward direction in said inside liquid storage bath and secondly to completely oxidize said insufficiently oxidized slurry while simultaneously restricting the stir of said insufficiently oxidized slurry in the upward and downward direction in said outside liquid storage bath to obtain a completely oxidized slurry and then said completely oxidized slurry is extracted.

4. A wet FGD according to claim 1, wherein the volume ratio of said liquid storage bath to said liquid sub-storage bath is set at values between 70:30 and 30:70.

5. A wet FGD according to claim 2, wherein the volume ratio of said liquid storage bath without a roof to said liquid sub-storage bath with said roof is set at values between 70:30 and 30:70.

6. A wet FGD according to claim 3, wherein the volume ratio of said inside liquid storage bath to said outside liquid sub-storage bath is set at values between 50:50 and 20:80.

**Patentansprüche**

1. Naß-FGD (Rauchgas-Entschwefelungs)-Verfahren zum Einführen von Verbrennungsabgas mit einem Schwefeloxidanteil von 1 Volumen-% oder darüber in einen Absorbtionsturm, bei dem

   - das Verbrennungsabgas entschwefelt wird, in dem es in Kontakt mit einer Schlämme gebracht wird, welche gelöschten Kalk oder Kalciumkarbonat enthält,
   - Luft in die im unteren Abschnitt des Absoptionsturms gespeicherte Schlämme geblasen wird, um die Schlämme in eine Gipsschlämme überzuführen, und
   - ein Teil der Gipsschlämme zurückgewonnen wird, während der Rest als Absorptionsflüssigkeit für das Schwefeloxid rezirkuliert wird,

   wobei seitlich von dem Absorptionsturm ein Flüssigkeits-Hilfspeicher vorgesehen ist, dessen Flüssigkeitsbad mit einem Bodenabschnitt eines Speicherflüssigkeitsbades des Absorptionsturms verbunden ist, und wobei Luft von Diffusoren ausgeströmt wird, welche an beiden Bodenabschnitten des Speicherflüssigkeitsbades des Absorptionsturms und des Hilfsspeicher-Flüssigkeitsbades angeordnet sind, so daß zunächst die Schlämme unvollständig oxidiert wird, während gleichzeitig die Bewegung der Schlämme in Abwärts- und Aufwärtsrichtung in dem Speicherflüssigkeitsbad begrenzt wird, und anschließend die unvollständig oxidierte Schlämme vollständig oxidiert wird, während gleichzeitig die Bewegung der unvollständig oxidierten Schlämme in Abwärts- und Aufwärtsrichtung in dem Hilfsspeicher Flüssigkeitsbad begrenzt wird, um eine vollständig oxidierte Schlämme zu erhalten, worauf die vollständig oxidierte Schlämme ausgebracht wird.

2. Naß-FGD-Verfahren zum Einführen von Verbrennungsabgas mit einem Schwefeloxidanteil von 1 Vol.% oder darüber in einen Absorptionsturm, bei dem

   - das Verbrennungsabgas entschwefelt wird, in dem es in Kontakt mit einer Schlämme gebracht wird, welche gelöschten Kalk oder Kalciumkarbonat enthält,
   - Luft in die im unteren Abschnitt des Absorptionsturms gespeicherte Schlämme geblasen wird, um die Schlämme in eine Gipsschlämme überzuführen, und
   - ein Teil der Gipsschlämme zurückgewonnen wird, während der Rest als Absorptionsflüssigkeit für das Schwefeloxid rezirkuliert wird,

   wobei ein Speicherflüssigkeitsbad des Absorptionsturms durch eine Trennwand unterteilt wird, welche an ihrem Bodenabschnitt einen Flüssigkeitsströmungsabschnitt aufweist, um ein erstes Speicherflüssigkeitsbad und ein zweites Speicherflüssigkeitsbad zu bilden, wobei nur in dem zweiten Speicherflüssigkeitsbad ein Dach vorgesehen ist und die Schlämme mit dem Schwefeloxid nur in das erste Speicherflüssigkeitsbad strömt,
   wobei Luft von Diffusoren ausgeströmt wird, welche an beiden Bodenabschnitten des ersten und zweiten Speicherflüssigkeitsbades angeordnet sind, so daß zunächst die Schlämme unvollständig oxidiert wird, während gleichzeitig die Bewegung der Schlämme in Abwärts- und Aufwärtsrichtung in dem ersten Speicherflüssigkeitsbad begrenzt wird, und anschließend die unvollständig oxidierte Schlämme vollständig oxidiert wird, während gleichzeitig die Bewegung der unvollständig oxidierte Schlämme in Abwärts- und Aufwärtsrichtung in dem zweiten Speicherflüssigkeitsbad begrenzt wird, um eine vollständig oxidierte Schlämme zu erhalten, worauf die vollständig oxidierte Schlämme ausgebracht wird.

3. Naß-FGD-Verfahren zum Einführen von Verbrennungsabgas mit einem Schwefeloxidanteil von 1 Vol.% oder darüber in einen Absorptionsturm bei dem

  - das Verbrennungsabgas entschwefelt wird, in dem es in Kontakt mit einer Schlämme gebracht wird, welche gelöschten Kalk oder Kalciumkarbonat enthält,
  - Luft in die im unteren Abschnitt des Absoptionsturms gespeicherte Schlämme geblasen wird, um die Schlämme in eine Gipsschlämme überzuführen, und
  - ein Teil der Gipsschlämme zurückgewonnen wird, während der Rest als Absorptionsflüssigkeit für das Schwefeloxid reduziert wird,

  wobei ein Speicherflüssigkeitsbad des Absorptionsturms durch eine zylinderförmige Trennwand unterteilt wird, um eine Doppelstruktur von inneren und äußeren Speicherflüssigkeitsbädern zu erhalten, so daß die Schlämme mit dem Schwefeloxid nur in das innere Speicherflüssigkeitsbad strömt, und

  wobei Luft von Diffusoren ausgeströmt wird, welche an beiden Bodenabschnitten der Speicherflüssigkeitsbäder angeordnet sind, so daß zunächst die Schlämme unvollständig oxidiert wird, während gleichzeitig die Bewegung der Schlämme in Abwärts- und Aufwärtsrichtung in dem inneren Speicherflüssigkeitsbad begrenzt wird, und anschließend die unvollständig oxidierte Schlämme vollständig oxidiert wird, während gleichzeitig die Bewegung der unvollständig oxidierten Schlämme in Abwärts- und Aufwärtsrichtung in dem äußeren Speicherflüssigkeitsbad begrenzt wird, um eine vollständig oxidierte Schlämme zu erhalten, worauf die vollständig oxidierte Schlämme ausgebracht wird.

4. Naß-FGD-Verfahren nach Anspruch 1, wobei das Volumenverhältnis zwischen dem Speicherflüssigkeitsbad und dem Hilfsspeicher-Flüssigkeitsbad auf Werte zwischen 70:30 und 30:70 festgelegt wird.

5. Naß-FGD-Verfahren nach Anspruch 2, wobei das Volumenverhältnis zwischen dem Speicherflüssigkeitsbad ohne Dach und dem Speicherflüssigkeitsbad mit Dach auf Werte zwischen 70:30 und 30:70 festgelegt wird.

6. Naß-FGD-Verfahren nach Anspruch 3, wobei das Volumenverhältnis zwischen dem inneren Speicherflüssigkeitsbad und dem äußeren Speicherflüssigkeitsbad auf Werte zwischen 50:50 und 20:80 festgelegt wird.


**Revendications**

1. Procédé de désulfurisation humide de gaz d'échappement pour introduire un gaz d'échappement d'une combustion contenant de l'oxyde de soufre à au moins un pour cent en volume dans une tour d'absorption, pour désulfurer ledit gaz d'échappement d'une combustion en le mettant en contact avec une boue comprenant de la chaux éteinte ou du carbonate de calcium, pour souffler de l'air dans ladite boue maintenue dans une partie inférieure de ladite tour d'absorption afin de transformer ladite boue en boue de gypse et pour récupérer une partie de ladite boue de gypse, le reste étant remis en circulation comme liquide d'absorption pour ledit oxyde de soufre, dans lequel un réservoir de sous-stockage est disposé à un côté de ladite tour d'absorption, ledit réservoir de sous-stockage étant relié à une section inférieure d'un réservoir de stockage de liquide de ladite tour d'absorption et dans lequel de l'air est introduit par des diffuseurs disposés dans les sections inférieures dudit réservoir de stockage de liquide de la dite tour d'absorption et dudit réservoir de sous-stockage de liquide de manière à, premièrement, insuffisamment oxyder ladite boue tandis qu'on limite simultanément l'agitation de la dite boue suivant la direction ascendante et descendante dans ledit réservoir de stockage de liquide et, deuxièmement, à oxyder complètement ladite boue insuffisamment oxydée tandis que l'on limite simultanément l'agitation de ladite boue insuffisamment oxydée suivant la direction ascendante et descendante dans ledit réservoir de sous-stockage pour obtenir une boue complètement oxydée et extraire par la suite ladite boue complètement oxydée.

2. Procédé de désulfurisation humide de gaz d'échappement pour introduire un gaz d'échappement d'une combustion contenant de l'oxyde de soufre à au moins un pour cent en volume dans une tour d'absorption, pour désulfurer ledit gaz d'échappement d'une combustion en le mettant en contact avec une boue comprenant de la chaux éteinte ou du carbonate de calcium, pour souffler de l'air dans ladite boue stockée dans une partie inférieure de ladite tour d'absorption afin de transformer ladite boue en boue de gypse et pour récupérer une partie de ladite boue de gypse, le reste étant remis en circulation comme liquide d'absorption pour ledit oxyde de soufre, dans lequel un réservoir de stockage de liquide de ladite tour d'absorption est divisé par une cloison ayant une zone d'écoulement de liquide dans sa partie inférieure pour former un premier réservoir de stockage et un deuxième réservoir de stockage, avec un plafond disposé uniquement dans ledit deuxième réservoir de stockage de liquide et ladite boue comprenant ledit oxyde de soufre s'écoulant uniquement dans ledit premier réservoir de stockage de liquide, et dans lequel de l'air est soufflé par des diffuseurs disposés dans les sections inférieures dudit premier réservoir de stockage de liquide de la dite tour d'absorption et dudit deuxième réservoir de sous-stockage de liquide de manière à, premièrement, oxyder insuffisamment ladite boue tandis qu'on limite simultanément l'agitation de la dite boue suivant la direction ascendante et descendante dans ledit premier réservoir de stockage de liquide et, deuxièmement, à oxyder complètement la boue insuffisamment oxydée tandis qu'on limite simultanément l'agitation de ladite boue insuffisamment oxydée suivant la direction ascendante et descendante dans ledit deuxième réservoir de stockage pour obtenir une boue complètement oxydée et extraire par la suite ladite boue complètement oxydée.

3. Procédé de désulfurisation humide de gaz d'échappement pour introduire un gaz d'échappement d'une combustion contenant de l'oxyde de soufre à au moins un pour cent en volume dans une tour d'absorption, pour désulfurer ledit gaz d'échappement d'une combustion en le mettant en contact avec une boue comprenant de la chaux éteinte ou du carbonate de calcium, pour souffler de l'air dans ladite boue stockée dans une partie inférieure de ladite tour d'absorption pour transformer ladite boue en boue de gypse et pour récupérer une partie de ladite boue de gypse, le reste étant remis en circulation comme liquide d'absorption pour ledit oxyde de soufre, dans lequel un réservoir de stockage de liquide de ladite tour d'absorption est divisé par une cloison cylindrique ayant une zone d'écoulement de liquide dans sa partie inférieure de façon à avoir une double structure de réservoirs de stockage de liquide intérieure et extérieure, avec ladite boue comprenant ledit oxyde de soufre s'écoulant uniquement dans ledit réservoir de stockage de liquide intérieure, et de l'air est soufflé par des diffuseurs disposés dans les sections inférieures desdits réservoirs de stockage de liquide de manière à, premièrement, oxyder insuffisamment ladite boue tandis qu'on limite simultanément l'agitation de la dite boue suivant la direction ascendante et descendante dans ledit réservoir de stockage de liquide intérieure et, deuxièmement, à oxyder complètement ladite boue insuffisamment oxydée tandis qu'on limite simultanément l'agitation de ladite boue insuffisamment oxydée suivant la direction ascendante et descendante dans ledit réservoir de stockage extérieure pour obtenir une boue complètement oxydée et extraire par la suite ladite boue complètement oxydée.

4. Dispositif de désulfurisation humide de gaz d'échappement selon la revendication 1, dans lequel le rapport entre les volumes dudit réservoir de stockage de liquide et dudit réservoir de sous-stockage de liquide est fixé à des valeurs comprises entre 70:30 et 30:70.

5. Dispositif de désulfurisation humide de gaz d'échappement selon la revendication 2, dans lequel le rapport entre les volumes dudit réservoir de stockage de liquide sans plafond et dudit réservoir de sous-stockage de liquide muni dudit plafond est fixé à des valeurs comprises entre 70:30 et 30:70.

6. Dispositif de désulfurisation humide de gaz d'échappement selon la revendication 3, dans lequel le rapport entre les volumes dudit réservoir de stockage de liquide intérieur et dudit réservoir de sous-stockage de liquide extérieur est fixé à des valeurs comprises entre 50:50 et 20:80.

F I G. 1

F I G. 2

F I G. 3

F I G. 4

AIR BUBBLES
BLOWING DIRECTION

4

NON-
REACTION
SECTION

2

REACTION
ZONE

COMPLETELY
OXIDATED
SECTION

I

8

6

7

# FIG. 5

STOPPING THE STIRRER
IN THE SLURRY LAYER

OPERATION OF THE STIRRER
IN THE SLURRY LAYER

MINIMUM QUANTITY
OF AIR BLOWING

QUANTITY OF SULFUR
OXIDE SUPPLIED

# FIG. 6

F I G. 7

FIG. 8

FIG. 9